# EUROPEAN PATENT APPLICATION

(11) **EP 4 844 380 A1**
(43) Date of publication of application: **25.11.2026**
(21) Application number: 25300066.5
(22) Date of filing: 22.05.2025
(51) Int. Cl.: G01N 21/64, G02B 21/00, G02B 21/36

(54) **THREE-DIMENSIONAL FLUORESCENCE MICROSCOPY IMAGING METHOD**

(71) Applicant: Cambridge Enterprise, Ltd., Cambridge Cambridgeshire CB2 1TN (GB)
(72) Inventor: The designation of the inventor has not yet been filed
(74) Representative: J A Kemp LLP

(57) **Abstract**

According to a first aspect of the disclosure there is provided a method of three-dimensional fluorescence microscopy imaging for localising a fluorescent particle in three dimensions, the method comprising: providing a sample to be imaged, wherein the sample comprises fluorescent particles configured to emit fluorescent light when excited; illuminating a three-dimensional volume of the sample with excitation light, the excitation light being configured to excite the fluorescent particles in the sample; imaging the fluorescent light emitted by the fluorescent particles within the illuminated three-dimensional volume, by imaging a plurality of substantially two-dimensional slices of the three-dimensional volume, wherein each of the images of the slices comprises substantially two-dimensional sections of three-dimensional point spread functions of imaged fluorescent particles; wherein an image plane is oblique or parallel to a focal plane of an objective lens configured to collect the fluorescent light emitted by the fluorescent particles for imaging; and wherein a rate at which the plurality of substantially two-dimensional slices are imaged is such that the point spread function for a fluorescent particle in the first state is imaged in at least two consecutive slices.

## Description

### TECHNICAL FIELD

The present disclosure relates to methods of and systems for three-dimensional fluorescence microscopy imaging. In a specific example, the disclosure relates to single molecule localization microscopy (SMLM).

### BACKGROUND ART

Single Molecule Localization Microscopy (SMLM) relies on the stochastic switching of single-molecule emitters to produce blinks of fluorescent light which can subsequently be localized with sub-diffraction precision to produce images with high resolution. To image the complex structure of biological systems, 3D implementations of SMLM encode the axial position of the single-molecule emitters in 2D images.

The blinks required for SMLM are not limited to the photophysical switching of fluorescence proteins or organic fluorophores but can also be produced by the transient and reversible binding between freely diffusing DNA oligonucleotides (imager strands) attached to fluorophores, and complementary DNA oligonucleotides (docking strands) linked to proteins of interest. This variant of SMLM, termed DNA-PAINT, allows for more flexibility in multi-colour imaging, simplifies quantitative imaging, and is more resilient to photobleaching as fluorescent probes with bleached fluorophores are continuously replenished from the excess in the solution¹¹. However, the excess of unbound probes in solution can create large amounts of background fluorescence, compromising the ability to detect individual blink events especially when imaging deeper in cells and tissues. To overcome this problem, optical modalities that provide optical sectioning such as line scanning or spinning disk confocal have been employed^{12,13}.

These modalities use only a fraction of the exposure duty cycle, reducing the number of collected photons¹⁴. This reduction in the photon numbers decreases the localization precision along the lateral dimensions, but more importantly compromises the effectiveness of 3D SMLM imaging along the axial dimension, as the reduced photon intensity is further diluted on the camera sensor and diminishes the intensity distributions required by the different methods to encode the axial position of the emitter.

Longer duty cycles and optical sectioning can be achieved by using light-sheet microscopy ¹⁵. Here an excitation objective lens is used to selectively illuminate a thin slice of the sample around the focal plane of a second detection objective lens which collects the emitted fluorescence and is arranged orthogonally to the excitation objective lens. Using this method and an astigmatic PSF for 3D imaging, Legant et al. were able to collect 3D volumes of cells but with very long acquisition times ranging over 3-10 days¹⁶. This experimental configuration also requires two objective lenses in close proximity, which excludes the use of typical sample mounting methods (e.g. slides, dishes, multi-well plates) and limits the selection of high NA objectives that are optimal for SMLM imaging.

It is an aim of the present disclosure to provide a method of three-dimensional fluorescence microscopy imaging that at least partially addresses one or more of the above problems.

### SUMMARY OF THE INVENTION

According to a first aspect of the disclosure there is provided a method of three-dimensional fluorescence microscopy imaging for localising a fluorescent particle in three dimensions, the method comprising: providing a sample to be imaged, wherein the sample comprises fluorescent particles configured to emit fluorescent light when excited; illuminating a three-dimensional volume of the sample with excitation light, the excitation light being configured to excite the fluorescent particles in the sample; imaging the fluorescent light emitted by the fluorescent particles within the illuminated three-dimensional volume, by imaging a plurality of substantially two-dimensional slices of the three-dimensional volume, wherein each of the images of the slices comprises substantially two-dimensional sections of three-dimensional point spread functions of imaged fluorescent particles; wherein an image plane is oblique or parallel to a focal plane of an objective lens configured to collect the fluorescent light emitted by the fluorescent particles for imaging; and wherein a rate at which the plurality of substantially two-dimensional slices are imaged is such that the point spread function for a fluorescent particle in the first state is imaged in at least two consecutive slices.

Optionally, the imaging is performed by remote focusing.

Optionally, the three-dimensional volume is imaged a plurality of times corresponding to plurality of imaging cycles, each imaging cycle imaging the plurality of substantially two-dimensional slices of the three-dimensional volume.

Optionally, each of the fluorescent particles is configured to transition between a first state in which the fluorescent particle is individually detectable, and second state in which the fluorescent particle is not individually detectable; and wherein a rate at which the plurality of substantially two-dimensional slices are imaged and an average rate at which the fluorescent particles transition from the first state to the second state have a relationship such that the point spread function for a fluorescent particle in the first state is imaged in at least two consecutive slices.

Optionally, the method further comprises: processing the images of the plurality two-dimensional slices to determine a position of each imaged fluorescent particle in three-dimensions based on the imaged three-dimensional point spread functions of the fluorescent particles; and generating a three-dimensional image based on the determined positions of each imaged fluorescent particle.

Optionally, the z-position of each imaged fluorescent particle is determined based on an estimated position of a peak photon number and/or intensity determined from images of the plurality two-dimensional slices corresponding a respective imaged fluorescent particle.

Optionally, the imaging is performed by scanning an oblique excitation light-sheet to image each two-dimensional slice. Optionally, the excitation light-sheet is provided to the sample through an objective lens configured to collect the fluorescent light emitted by the fluorescent particles for imaging. Alternatively, the excitation light-sheet may is scanned across the sample using one or more mirrors.

Optionally, the excitation light-sheet is scanned across the sample using a pair of mirrors. Optionally, the one or more mirrors are arranged substantially at a primary image plane of an optical system comprising the objective lens. Optionally, the one or more mirrors are galvanometric mirrors.

Optionally, the angle of the excitation light-sheet relative to the focal plane of the objective lens is substantially the same over a scanning range.

Optionally, the objective lens has a high numerical aperture. Optionally, the numerical aperture is between 1 and 1.5, e.g. around 1.4.

Optionally, a plane of an imaging sensor configured to capture the images is arranged substantially parallel to a plane of the excitation light-sheet.

Alternatively, the imaging is performed by scanning a tertiary objective forming an imaging optical system to image each two-dimensional slice. Alternatively, the imaging is performed by scanning using a deformable mirror to image each two-dimensional slice.

Optionally, the fluorescent particles are single-molecule emitters.

Optionally, the fluorescent particles are diffuse within the sample and configured to bind to structures of interest within the sample, wherein the fluorescent particles are localised in the bound state. Optionally, the fluorescent particles comprise DNA oligonucleotides attached to fluorophores configured to bind to complementary DNA oligonucleotides attached to proteins of interest within the sample.

Optionally, the fluorescent particles comprise fluorescent particles configured to emit different colours, for multicolour imaging.

According to a second aspect of the disclosure, there is provided a system for three-dimensional fluorescence microscopy imaging for localising a fluorescent particle in three dimensions, the system comprising: a sample to be imaged, wherein the sample comprises fluorescent particles configured to emit fluorescent light when excited; a microscopy system configured to:
illuminate a three-dimensional volume of the sample with excitation light, the excitation light being configured to excite the fluorescent particles in the sample;
image the fluorescent light emitted by the fluorescent particles within the illuminated three-dimensional volume, by imaging a plurality of substantially two-dimensional slices of the three-dimensional volume, wherein each of the images of the slices comprises substantially two-dimensional sections of three-dimensional point spread functions of imaged fluorescent particles;
wherein an image plane is oblique or parallel to a focal plane of an objective lens configured to collect the fluorescent light emitted by the fluorescent particles for imaging; and wherein a rate at which the plurality of substantially two-dimensional slices are imaged is such that the point spread function for a fluorescent particle in the first state is imaged in at least two consecutive slices.

Optionally, the microscopy system is an oblique plabe microscopy system, and the oblique plane microscopy system comprises: a first optical system comprising a first objective lens, the first optical system configured to deliver excitation light in the form of an oblique light sheet to an object and gather fluorescence light from the object in response to the excitation light sheet; an excitation light coupling unit configured to couple the excitation light to an optical path of the first optical system; and at least two synchronised scanning mirrors arranged on the optical path, configured to scan the excitation light across the sample and de-scan the fluorescence light.

According to a third aspect of the disclosure, there is provided a method of controlling the system of the second aspect, the method comprising: controlling the microscopy system to illuminate a three-dimensional volume of the sample with excitation light, the excitation light-sheet being configured to excite the fluorescent particles in the sample when the particles are in the first state; controlling oblique plane microscopy system to image the fluorescent light emitted by the fluorescent particles within the illuminated three-dimensional volume, by imaging a plurality of substantially two-dimensional slices of the three-dimensional volume, wherein each of the images of the slices comprises substantially two-dimensional sections of three-dimensional point spread functions of imaged fluorescent particles; wherein a rate at which the plurality of substantially two-dimensional slices are imaged is such that the point spread function for a fluorescent particle in the first state is imaged in at least two consecutive slices.

According to a fourth aspect of the disclosure there is provided an image processing method comprising: obtaining images a plurality of substantially two-dimensional slices of the three-dimensional volume, wherein each of the images of the slices comprises substantially two-dimensional sections of three-dimensional point spread functions of imaged fluorescent particles, wherein the images are previously obtained by the imaging method of the first aspect; processing the images of the plurality two-dimensional slices to determine a position of each imaged fluorescent particle in three-dimensions based on the imaged three-dimensional point spread functions of the fluorescent particles; and generating a three-dimensional image based on the determined positions of each imaged fluorescent particle.

According to a fifth aspect there is provided a method of three-dimensional fluorescence microscopy imaging, the method comprising: providing a sample to be imaged, wherein the sample comprises fluorescent particles configured to emit fluorescent light when excited, wherein each of the fluorescent particles is configured to transition between a first state in which the fluorescent particle is individually detectable, and second state in which the fluorescent particle is not individually detectable; scanning an excitation light-sheet across at least a portion of the sample to illuminate a three-dimensional volume of the sample, the excitation light-sheet being configured to excite the fluorescent particles in the sample when the particles are in the first state; imaging the fluorescent light emitted by the fluorescent particles within the illuminated three-dimensional volume, by imaging a plurality of substantially two-dimensional slices of the three-dimensional volume, each of the slices substantially corresponding to a plane of the excitation light-sheet at a respective scanning position, wherein each of the images of the slices comprises substantially two-dimensional sections of three-dimensional point spread functions of imaged fluorescent particles; wherein the plane of the excitation light-sheet is oblique to a focal plane of an objective lens configured to collect the fluorescent light emitted by the fluorescent particles for imaging; and wherein a rate at which the plurality of substantially two-dimensional slices are imaged and an average rate at which the fluorescent particles transition from the first state to the second state have a relationship such that the point spread function for a fluorescent particle in the first state is imaged in at least two consecutive slices.

Optionally, the excitation light-sheet is scanned across the sample to illuminate a three-dimensional volume of the sample a plurality of times corresponding to plurality of scanning cycles, each scanning cycle imaging a plurality of substantially two-dimensional slices of the three-dimensional volume.

According to a sixth aspect there is provided a system for three-dimensional fluorescence microscopy imaging, the system comprising: a sample to be imaged, wherein the sample comprises fluorescent particles configured to emit fluorescent light when excited, wherein each of the fluorescent particles is configured to transition between a first state in which the fluorescent particle is individually detectable, and second state in which the fluorescent particle is not individually detectable; an oblique plane microscopy system configured to: scan an excitation light-sheet across at least a portion of the sample to illuminate a three-dimensional volume of the sample, the excitation light-sheet being configured to excite the fluorescent particles in the sample when the particles are in the first state; image the fluorescent light emitted by the fluorescent particles within the illuminated three-dimensional volume, by imaging a plurality of substantially two-dimensional slices of the three-dimensional volume, each of the slices substantially corresponding to a plane of the excitation light-sheet at a respective scanning position, wherein each of the images of the slices comprises substantially two-dimensional sections of three-dimensional point spread functions of imaged fluorescent particles; wherein the plane of the excitation light-sheet is oblique to a focal plane of an objective lens configured to collect the fluorescent light emitted by the fluorescent particles for imaging; and wherein a rate at which the plurality of substantially two-dimensional slices are imaged and an average rate at which the fluorescent particles transition from the first state to the second state have a relationship such that the point spread function for a fluorescent particle in the first state is imaged in at least two consecutive slices.

According to a seventh aspect there is provided a method of controlling the system of claim the sixth aspect, the method comprising: controlling the oblique plane microscopy system to scan an excitation light-sheet across at least a portion of the sample to illuminate a three-dimensional volume of the sample, the excitation light-sheet being configured to excite the fluorescent particles in the sample when the particles are in the first state; oblique plane microscopy system to image the fluorescent light emitted by the fluorescent particles within the illuminated three-dimensional volume, by imaging a plurality of substantially two-dimensional slices of the three-dimensional volume, each of the slices substantially corresponding to a plane of the excitation light-sheet at a respective scanning position, wherein each of the images of the slices comprises substantially two-dimensional sections of three-dimensional point spread functions of imaged fluorescent particles; wherein a rate at which the plurality of substantially two-dimensional slices are imaged and an average rate at which the fluorescent particles transition from the first state to the second state have a relationship such that the point spread function for a fluorescent particle in the first state is imaged in at least two consecutive slices.

### BRIEF DESCRIPTION OF THE DRAWINGS

Further features of the disclosure will be described below, by way of non-limiting examples and with reference to the accompanying drawings, in which:
Fig. 1 shows an example OPM system;
Fig. 2 shows data relating to scanning unit voltage ratio calibration;
Fig. 3 schematically shows determination of PSF position;
Fig. 4 shows volumetric imaging of follicle cell nuclei in Drosophila egg chambers;
Fig. 5 shows evolution of adherence junctions with imaging time; and
Fig. 6 shows fast multicolour sequential imaging of Mitochondria/Vimentin in large 3D volumes;
Fig. 7 shows mirror step size and image resolution data; and
Fig. 8 shows an alternative optical setup with a deformable mirror.

### DETAILED DESCRIPTION

Some example imaging methods according to the present disclosure use a variant of light-sheet microscopy, termed Oblique Plane Microscopy (OPM). The plane of an excitation light-sheet is oblique to a focal plane of an objective lens configured to collect the fluorescent light. In some example methods, a single (e.g. high NA) objective is used to deliver the light-sheet illumination and collect the emitted fluorescence simultaneously. In imaging methods according to the present disclosure, the excitation light-sheet is scanned across at least a portion of a sample to illuminate a three-dimensional volume of the sample. In some examples, the excitation light-sheet may be scanned across the sample using one or more mirrors, e.g. a pair of galvanometric mirrors arranged substantially at a primary image plane of an optical system comprising the objective lens.

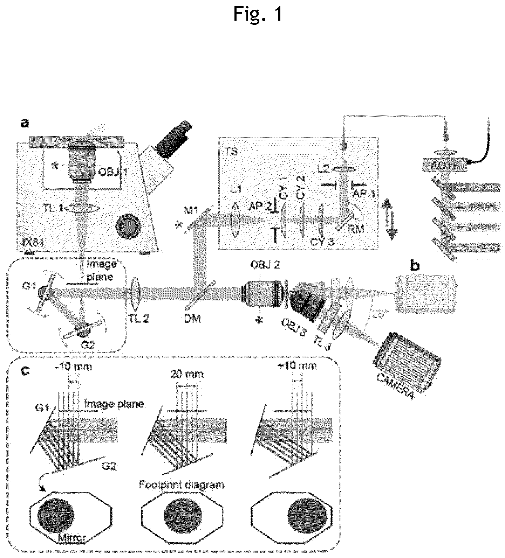

Fig. 1a shows an example OPM system according to the disclosure. As shown in Fig. 1, the OPM system comprises a first optical system OBJ 1, TL 1 comprising a first objective lens OBJ 1. The first optical system is configured to deliver excitation light in the form of an oblique light sheet to an object (e.g. a sample) and gather fluorescence light from the object in response to the excitation light sheet. Preferably, the first objective lens has a high numerical aperture, e.g. a numerical aperture between 1 and 1.4. As shown, the first optical system may additionally comprise a tube lens TL 1. As shown, the first optical system may be a telescopic optical system. Further, the first optical system may be provided within a microscope base IX81, e.g. a commercially available microscope base such as an Olympus IX81 microscope base. The position of an object-side focal plane of the first objective lens OBJ 1 (e.g. the position of the primary objective focal plane within the sample) may be adjustable, e.g. by a mechanism forming part of the microscope base.

As shown in Fig. 1a, the OPM system comprises a second optical system OBJ 2, TL2, comprising a second objective lens OBJ 2. The second optical system is configured to perform remote focussing. As shown, the second optical system may additionally comprise a tube lens TL 2. As shown, the second optical system may be a telescopic optical system. As shown, the second optical system may be arranged back-to-back with the first optical system. The first and second optical systems may be arranged to have a substantially 4f configuration, for example. Preferably, the overall magnification of the first telescopic system comprised of OBJ 1 and TL 1 and the second telescopic system comprised of OBJ 2 and TL 2 should be about equal to the ratio of the refractive indices of the immersion media in the first and second objective lenses, respectively.

As shown in Fig. 1a, the OPM system comprises an excitation light coupling unit DM configured to couple the excitation light to a common optical path of the first and second optical systems. The excitation light coupling unit DM may be a dichroic mirror arranged on the common light path, configured to reflect excitation light along the common light path from an excitation light source system configured to generate the excitation light forming the oblique light sheet. As shown, the excitation light coupling unit DM may be arranged on a light path within the second optical system OBJ 2, TL 2, e.g. between the second objective lens OBJ 2 and the second tube lens TL2.

As shown in Fig. 1a, the OPM system comprises a third optical system OBJ 3, QBF, TL 3. The third optical system is configured to image the object at an imaging sensor CAMERA. As shown, the third optical system comprises a third objective lens OBJ 3 and a third tube lens TL 3. As shown, between the third objective lens OBJ 3 and the third tube lens TL 3, an optical filter QBF may be provided, such as a quadband emission filter or other single or multiband filter. As shown, the light path of the third optical system is angled obliquely to the light path of the second optical system. The oblique angle corresponds to the oblique angle of the light sheet relative to the imaging axis. As shown, the third objective lens may be a glass-tipped objective lens.

Preferably, the angle of the light sheet with respect to the imaging plane is between 20 and 40 degrees, more preferably about 30 degrees, e.g. 28 degrees.

As shown in Fig. 1a, the OPM system comprises two synchronised scanning mirrors G1, G2 arranged on the common optical path, between the first and second optical systems. The two synchronised scanning mirrors G1, G2 are configured to scan the excitation light across the sample and de-scan the fluorescence light. In other examples, more than two synchronised scanning mirrors may be provided. As shown, the synchronised scanning mirrors G1, G2 are arranged substantially at a primary image plane of the first optical system OBJ 1, TL 1. Preferably, the synchronised scanning mirrors G1, G2 are galvanometric mirrors.

Fig. 1c schematically shows a scanning of an image across the intermediate image plane of the microscope base by the synchronised scanning mirrors G1, G2. As shown, the synchronised mirrors G1, G2 are configured such that the excitation light sheet is translated in the focal plane of the first objective lens over a scanning range of the scanning mirrors G1, G2. Preferably, an oblique angle of the excitation light-sheet relative to the focal plane of the first objective lens is substantially the same over the scanning range of the scanning mirrors G1, G2.

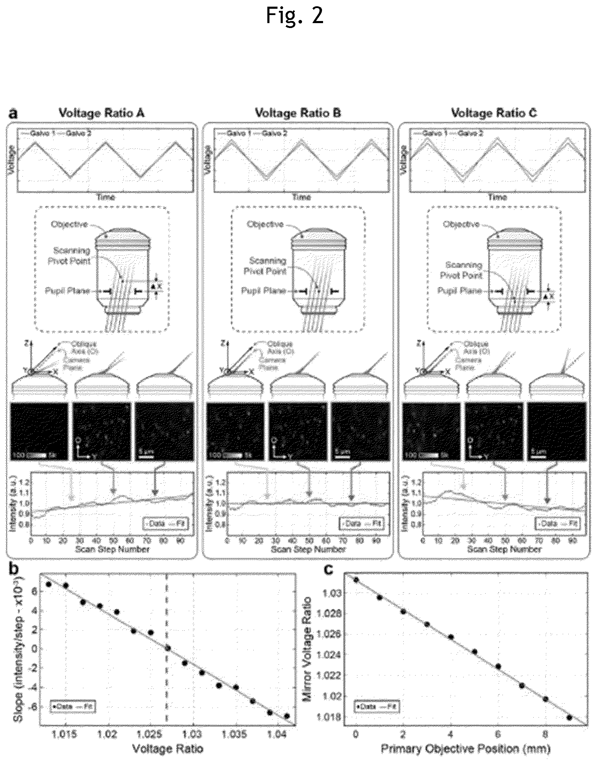

Fig. 2 shows the synchronisation of the scanning mirrors G1, G2 in further detail. As shown in Fig. 2a, the synchronised mirrors may pivot the excitation light path about a pivot point during scanning. As shown in the central image, preferably, the pivot point is arranged at a pupil plane of the first objective lens OBJ 1.

As shown in Fig. 2, the synchronisation of the synchronised scanning mirrors G1, G2 is configured to be adjusted. Preferably, the adjustment is based on an adjustment of the position of the object-side focal plane of the first objective lens OBJ 1, such that adjustment the position of the object-side focal plane of the first objective lens does not result in a change of an oblique angle of the light sheet. Preferably, the scanning of the synchronised scanning mirrors G1, G2 is configured to be adjusted such that a pivot point of the excitation light beam tracks a pupil plane of the first objective lens OBJ 1 as the position of an object-side focal plane of the first objective lens OBJ 1 is adjusted.

As shown in Fig. 1a, the OPM system comprises an excitation light source generating system. The excitation light source generating system is configured to generate the excitation light forming the oblique light sheet. As shown, the excitation light source generating system may comprise a plurality of laser light sources. As shown, the excitation light from the laser light sources may be combined via one or more dichroic mirrors. The excitation light is collimated and formed into a light sheet by an optical system L1, L2, CY 1, CY 2, CY 3. The excitation light may be directed to the excitation light coupling unit DM by a mirror M1, as shown.

Imaging methods according to the present disclosure use a sample to be imaged comprising fluorescent particles (also referred to as emitters) configured to emit fluorescent light when excited. Each of the fluorescent particles is configured to transition between a first state in which the fluorescent particle is individually detectable, and second state in which the fluorescent particle is not individually detectable.

In some example methods, the fluorescent particles switch stochastically between the first and second states. In some example methods, the fluorescent particles are configured to bind to structures of interest within the sample, wherein the fluorescent particles are in the first state when bound and in the second state when unbound and diffuse within the sample. For example, the fluorescent particles may comprise DNA oligonucleotides attached to fluorophores configured to bind to complementary DNA oligonucleotides attached to proteins of interest within the sample. Such an example may be a DNA-PAINT method. However, methods according to the disclosure are not limited to DNA-PAINT methods.

The excitation light-sheet is scanned across at least a portion of the sample to illuminate a three-dimensional volume of the sample. The excitation light-sheet is configured to excite the fluorescent particles in the sample when the particles are in the active state, such that they emit fluorescence light.

The fluorescent light emitted by the fluorescent particles within the illuminated three-dimensional volume is imaged by imaging a plurality of substantially two-dimensional slices of the three-dimensional volume. Each of the slices substantially corresponds to a plane of the excitation light-sheet at a respective scanning position. Further, each of the images of the slices comprises substantially two-dimensional sections of three-dimensional point spread functions of imaged fluorescent particles.

According to the method of the disclosure, a rate at which the plurality of substantially two-dimensional slices are imaged and an average (e.g. mean) rate at which the fluorescent particles transition from the first state to the second state have a relationship such that the point spread function for a fluorescent particle in the first state is imaged in at least two, but preferably more than two (e.g. at least three), consecutive slices. In other words, the imaging frame rate is higher than the average rate of switching. For example, the imaging rate must be faster than the average binding time of the fluorescent particles. In some examples, the imaging rate may be at least 3 times, at least 5 times, at least 7 times, or at least 10 times the average rate of switching.

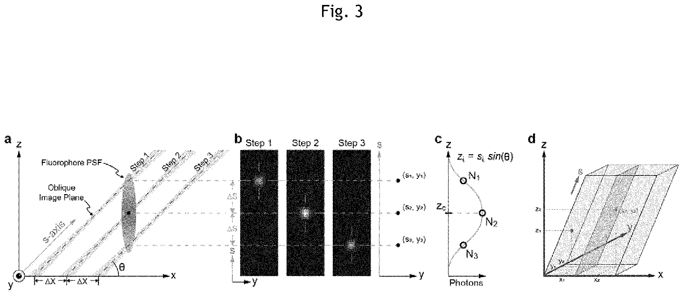

Fig. 3 illustrates a specific example method. As shown in Fig. 3a, the oblique light-sheet illuminates a plane along the Y and S axes at an angle of 28° with respect to the X axis. By stepping the oblique light-sheet along the X direction, multiple images of an emitter at the YS plane (i.e. the above-described substantially two-dimensional slices) are captured. As shown, the oblique excitation light sheet is scanned along the x-dimension through the sample volume in discreet steps with spacing ΔX. The scan step size (ΔX) sets the sampling interval for the PSF of an emitter.

As shown in Fig. 3b, accordingly, the PSF of the emitter is probed at different s-positions, corresponding to different Z planes. Localizing the emitter on the YS plane along with the corresponding position of the light-sheet readily provides the XY position of the emitter. At each step along the x-axis, an image of the PSF is captured on the oblique image plane and the emitter is localized to extract the (s, y) coordinates and the number of photons (N) resulting in a set of measurements (s, y, N) for that single emitter. The emitter position is therefore sampled multiple times as the oblique image plane is stepped through the sample volume.

As shown in Fig. 3c, the Z position of the emitter is encoded in the number of photons collected at each step (i.e. for each substantially two-dimensional slice). A maximum likelihood estimate of the z-position of the emitter is obtained based on the number of photons collected at each s-position. Thus, the s-coordinate, combined with the number of photons at each measurement, encode the emitter z-position.

As shown in fig. 3d, the dimensions of the oblique light-sheet determine the extent of the image 3D volume along the Z and Y dimensions, while the number of steps determine the extent of the volume along the X dimension. During a scan, emitters are localized on the oblique (s, y) plane and their cartesian (x, y, z) coordinates are obtained throughout the entire volume without the need for stitching. Due to the oblique view, the final emitter coordinates are contained in a volume that has a tilted boundary matching the light-sheet angle.

Imaging methods according to the present disclosure may thus comprise processing the images of the plurality two-dimensional slices to determine a position of each imaged fluorescent particle in three-dimensions, based on the imaged three-dimensional point spread functions of the fluorescent particles. The determination of position may be based on the number of photons collected and/or intensity for a given fluorescent particle in a plurality of the imaged two-dimensional slices. The z-position of an emitter may be determined based on an estimated position of a peak number of photons. The x position of an emitter may be determined based on the s-position, x-position of the image slice (based on step size and number of steps). The y-position may be determined directly from the s-y plane images.

Imaging methods according the present disclosure may further comprise generating a three-dimensional image based on the determined positions of each imaged fluorescent particle.

In some example methods, the excitation light-sheet may be scanned across the sample to illuminate the three-dimensional volume of the sample a plurality of times, corresponding to plurality of scanning cycles. Each scanning cycle images a plurality of substantially two-dimensional slices of the three-dimensional volume. Different fluorescent particles, and/or different blinking events, may be imaged in each cycle. Accordingly, a more detailed 3D image can be built up using data from the plurality of cycles.

The above-described method may reduce reliance on calibration routines and complexity associated with previous 3D imaging methods, since it does not impose a particular shape on the PSF of the emitter or partition the collected photons to infer axial position. It therefore maintains good performance over greater imaging depths in cells and tissues where photon intensities are weak. Additionally, the oblique geometry of the light-sheet and its extent along the S axis may enable the localization of emitters through the entire volume of the sample in a single scan. This may allow the generation of super-resolved image of the entire volume without the need for stitching and/or de-skewing of large image stacks in post processing.

In the above examples, imaging is performed without mechanically agitating the sample. This may be achieved by using remote focussing, for example. The first objective lens OBJ1 may remain stationary during imaging. Components mechanically connected to the sample and/or sample stage, such as those within the microscope base may remain stationary during imaging.

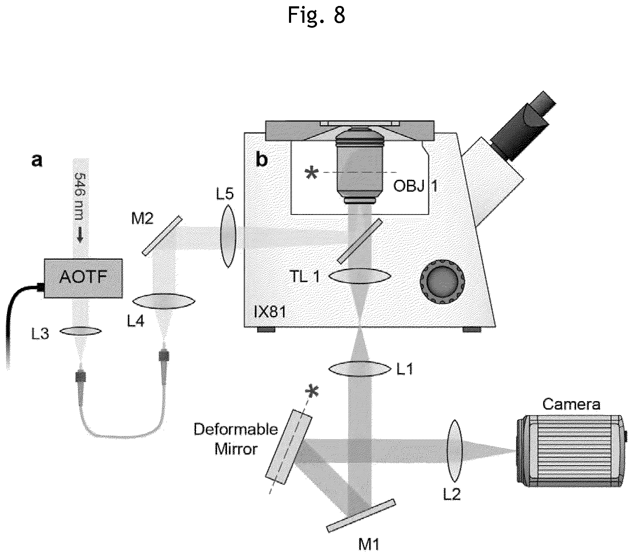

In alternative examples according to the disclosure, instead of scanning an excitation light-sheet, image scanning may be performed by using a deformable mirror as shown in Fig. 8, or by scanning a tertiary objective forming part of the optical system.

The following pertains to experimental data obtained using methods in accordance with the present disclosure. In the following, "we", "our", etc, refers to the inventors.

### Experimental Methods

The camera images an oblique plane where its S and Y dimension determine the depth and the Y dimension of the volume respectively, while the X dimension of the volume is determined by the scan range. Given that the PSF size along the X dimension is ~300 nm a step size of ~150 nm would provide Nyquist sampling of the volume along the X-dimension. However, in our implementation the emitter is localized on the Y-S plane and steps along the X axis do not affect the size of the region on the camera for the emitter localization but determine the number of repeats on the PSF measurements. Given that a minimum of 2 measurements is sufficient to localize the position of an emitter in 3D, larger steps in the range of 450-700 nm can be used and expedite data acquisition.

We opted for longer camera exposure times in the range of 20-30 msec, and longer steps of ~500-700 nm to ensure a minimum of 2 measurements per PSF. These conditions increase the number of binding events that can be localized and expedite data acquisition without any loss in localization precision compared to previous 2D measurements of the same tissue samples.

Our method relies on stepping a light-sheet to perform multiple measurements of an emitter's PSF during the time interval that the emitter is in its "on" state. Therefore, the camera exposure time at each step and the step size along the X scanning dimension involves several trade-offs. Repeated measurements on the emitter's PSF improve errors on the estimates of the emitter's position and require smaller step sizes. But smaller step sizes lead to shorter exposure times per step that collect fewer photons. This decrease both the number of emitters that can be detected above background and the precision with which they can be localized at each step/measurement.

The OPM system used for data collection was integrated into a commercially available inverted microscope base (Olympus, IX81) with the help of a scan-mirror pair. The system was identical to the one described previously¹⁹ except for minor modifications to allow for Cy3B imaging. These include the incorporation of a laser line at 546 nm, the addition of a dichroic mirror to separate Cy3B fluorescence from the excitation laser and an additional band pass filter.

Data acquisition and instrument control is performed with two data acquisition cards (NI, PCIe-7853R, AO Card Number) and custom control software developed in the LabView environment paired with an existing control package publicly available at (https://github.com/Gurdon-Super-Res-Lab/Microscope-Control). Unlike traditional imaging modalities, in OPM the depth of the acquired volume is set by the size of the camera ROI. That is, because the camera is viewing an oblique plane, the size of the ROI, along the s-dimension, sets the imaging depth. The other dimension of the ROI sets the y-size of the final volume, and the scan length sets the x-dimension. Thus, the ROI size is set based on the sample and required imaging depth. After setting an ROI on the camera, the scan length and step size were set. A field programable gate array (FPGA) data acquisition card (DAQ) (NI, PCIe7852R) was used to synchronize mirror stepping and camera acquisition. This card has both digital inputs and outputs and analogue voltage outputs. The camera sent a trigger ready signal to the FPGA DAQ card which, in turn, triggered one mirror step. After the mirror step was complete, the FPGA card triggered the camera to capture the next frame. This continued until the complete volume had been scanned at which point the FPGA card returned the mirrors to their starting positions and the process was repeated. Data was acquired in blocks (cycles) of 100 volumes, typically taking between 1 to 5 minutes to acquire all 100 volumes (depending on the scan length and camera exposure time). The sample z-position was continuously monitored during data collection as described previously ¹³. The sample z-position was corrected anytime it went outside the range ± 10 nm using a z-piezo stage (Mad City Labs,). After each cycle of 100 volumes was complete, the sample XY position was checked and corrected if necessary. The z-position of the primary objective lens was continuously monitored, and the voltage ratio of the scanning mirrors was adjusted based on a previous calibration to compensate for axial lens motion. Without this correction, axially translating the objective lens will misalign the back aperture and the focused excitation spot causing the light-sheet angle to change while scanning. Each image file containing 100 volumes was automatically transferred to a Network Attached Storage (NAS) drive (Synology) for processing. Data acquisition times typically ranged between 2 and 7 hours depending on the scan length, number of steps and camera exposure time. The camera had an effective pixel size of 117 nm along the s- and y-axis.

Raw camera frames were converted from ADUs to photons based on manufacture supplied gain information and experimentally determined offset. Candidate single molecule events (blinks) were identified using a wavelet-based method implemented in MATLAB ²⁷. After candidate locations were identified, 7 x 7 subregions were cropped for each candidate location and fit using an MLE fitting package for 2D Gaussians. This provided a set of (y, s) coordinates for each detected blink along with the number of photons.

During acquisition, a single blink event is sampled multiple times at several sequential mirror positions (steps) as the excitation light-sheet and detection plane are scanned through the sample volume. This corresponds to a set of camera frames where a single blink is recorded multiple times with slightly shifted s-positions (s-step) in each sequential camera frame (proportional to the mirror step size). Thus, each (y, s) coordinate must be clustered with the other (y, s) coordinates arising from the same blinking event that appears in subsequent camera frames. When a first (y, s) event is identified, the subsequent (y, s) coordinates will always appear one s-step away and always proceed in the same direction. This makes clustering (y, s) coordinates into PSF tracks straightforward as the stepping direction and s-step size is already known. Each time an unclustered (y, s) coordinate is identified, the subsequent frame is checked for a (y, s) coordinate one s-step away in the correct direction. If another coordinate is identified, it is added to the PSF track (cluster), and the next frame is checked. This process is repeated on each subsequent frame until no new (y, s) coordinate, in the positive s-direction, one s-step away, is found. Each (y, s) coordinate associated with the newly identified PSF track (cluster of (y, s) points arising from a single blink event) is tagged with a unique track number. In this way all the (y, s) coordinates within a single volume are clustered into PSF tracks (or excluded if they are not part of a track). Thus, each single molecule blink event is sampled multiple times and represented by a set of (y, s) coordinates from which the (x, y, z) position are estimated.

The y-position was simply taken as the localization precision weighted average of all the yᵢ-positions in a PSF track as $y = \left(\sum {y}_{i} / {σ}_{i}^{2}\right) / \left(\sum 1 / {σ}_{i}^{2}\right)$. Each time the mirrors were stepped, the x-position of the blink event appears to change due to the excitation light sheet and detection plane positions translating one mirror step along the x-dimension in the sample volume. To correct for this, the x-position for each PSF track was computed as *xᵢ = sᵢ* cos(*θ*) - *n* · Δ*X* where *n* is the mirror step number (position within the sample volume) and Δ*X* is the mirror step size. The final x-position was taken as the localization precision weighted average of the *xᵢ's* or $x = \left(\sum {x}_{i} / {σ}_{i}^{2}\right) / \left(\sum 1 / {σ}_{i}^{2}\right)$.

As the mirrors are stepped, the position (z) of the excitation light-sheet along the Z line defined by the position of the emitter is changing. Given that both the projection of the excitation light-sheet and the PSF along the Z dimension have gaussian intensity profiles, the number of collected photons should also follow a gaussian distribution with distance and reach a maximum where the excitation light-sheet overlaps with the position of the fluorophore (m). The mean value of collected photons as a function of z should then be: $μ \left(z\right) = {I}_{o} {e}^{- \frac{{\left(z-m\right)}^{2}}{2 {σ}^{2}}} ,$ where *Iₒ* is the brightness of the fluorophore and *σ* is the FWHM of the overall PSF of the system, determined experimentally by fitting data from beads. The probability of measuring *nᵢ* photons when the excitation light-sheet is at a position *zᵢ* is: $p \left({n}_{i}\right) = \frac{μ {\left({z}_{i}\right)}^{{n}_{i}} {e}^{- μ \left({z}_{i}\right)}}{{n}_{i} !}$ and the likelihood *L* of an emitter located at position *m* given a set of collected photons (*n₁,..., nₖ*) from k different measurements with the light-sheet at positions (*z₁*,..., *zₖ*) is: $L \left(\left.m, {I}_{o}\right|\left[{z}_{1}, {n}_{1}\right],…,\left[{z}_{k}, {n}_{k}\right]\right) = {\prod }_{1}^{k} \frac{μ {\left(m, {I}_{o}\right)}^{{n}_{i}} {e}^{- μ \left(m, {I}_{o}\right)}}{{n}_{i} !}$

Where the z-positions are computed from each (y, s) coordinate in a PSF track as *zᵢ = sᵢ*sin(*θ*) and each *zᵢ* is paired with its corresponding number of photons [*zᵢ*, *nᵢ*]. Finally, to estimate the emitter's position (*m*) in Z we need to find the parameters (*m, I₀*) that maximize the *log(L).* This is equivalent to minimize the *-log(L)* and performed in MATLAB using the *fminsearch* function.

Redundancy based drift correction was performed directly on the (y, s) data in post-processing. As the s-coordinate contains information about both the x- and z- coordinates, drift correcting the (y, s) data already corrects for (x, y, z) drift. That is, a 2D drift correction method applied to the (y, s) data results in 3D drift correction without the additional processing time of an added third dimension. Here, we applied the redundancy-based drift correction previously reported by Wang *et al.* to the (y, s) data before converting to (x, y, z) coordinates ²⁸.

### SMLM over extended tissue volumes

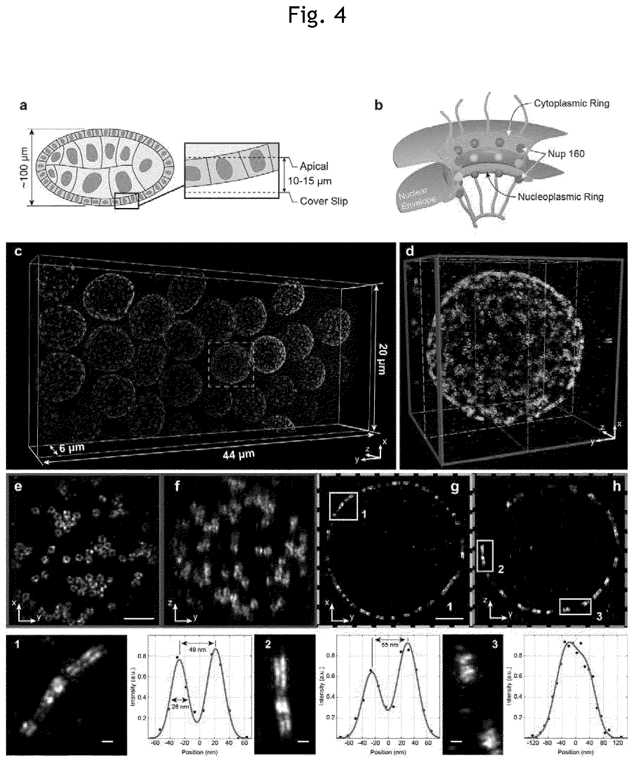

To demonstrate the ability of the method to capture volumes of tissue samples with high resolution, we performed DNA-PAINT imaging on *Drosophila* egg chambers in which the endogenous nuclear pore complex (NPC) protein, NUP160 was fused to the self-labelling HALO tag and then coupled to a docking strand (Fig. 4a) ^{13,20}. NPCs have been proposed as a reference system for super-resolution microscopy because of their known structure and their characteristic 8-fold rotational symmetry ²¹. Nup160 is present in two copies in each of the eight spokes of the cytoplasmic and nuclear NPC rings and offers a straight-forward way to quantify axial and lateral resolution (Fig. 4b) ²².

We imaged oblique volumes extending ~30 x 100 x 40 µm³ in X and Y and Zdimensions respectively, which allowed us to capture multiple follicle cell nuclei in their entirety (Fig. 4c, d). By taking 300 nm thick sections of the volume at the surface of the nucleus along the XY and YZ planes, we could observe the characteristic ring-shaped structure of the NPCs on both planes (Fig. 4e, f), while cross-sectional views allowed us to measure the separation between the cytoplasmic and nuclear rings by a double-gaussian fit (Fig. 4g, h, insets 1-3). Because of egg chamber curvature, follicle cell nuclei lie at different depths in the egg chamber, and this allowed us to repeat these measurements in different parts of the volume, giving an average value of 58.0 ± 4.5 nm (mean ± std, n=67) for the XY plane in good agreement with the expected value from EM data. Furthermore, the FWHM of each gaussian provides an experimental measurement of the resolution along the XY dimensions with an average value of 35.0 ± 8.2 nm (mean ± std, n=134). Cross-sectional images along the YZ plane were able to resolve the cytoplasmic and nuclear rings along the Y dimension but not along the Z dimension (Fig. 4h). Here, line profiles along the axial (Z) dimension failed to resolve the separation between the two rings consistent with the expected ~2-fold drop in the resolution along the axial dimension because of the anisotropy of the PSF (Fig. 4h, inset 2, 3).

Fig. 4 shows volumetric imaging of follicle cell nuclei in Drosophila egg chambers, namely: (a) Schematic of a Drosophila egg chamber showing a detailed view of the follicular epithelium. (b) Schematic of an NPC showing the nuclear and cytoplasmic rings and the location of the NUP160 protein. (c) 3D reconstruction of a 20 x 44 x 6 µm³ (XYZ) volume capturing the nuclei of several epithelial cell in a stage 7 Drosophila egg chamber. (d) A single nucleus contained in a 3D volume of 5 x 5 x 5.5 µm³ (XYZ) from the data shown in (c). (e, f) 2D reconstructions of 300 nm thick slice along the XY (e) and YZ (f) planes showing the NPC rings on the surface of the nucleus in (d). Scale bar 0.5 µm. (g, h) 2D reconstructions of 300 nm thick slices along the XY (g) and YZ (h) planes showing the separation between the nuclear and cytoplasmic rings of NPCs from the nucleus shown in (d). Scale bar 1 µm. The nuclear and cytoplasmic rings can be resolved along the X and Y dimensions with a separation of 49 nm (inset 1). Measurements along the YZ plane can resolve the two rings with a measured separation of 55 nm along the Y dimension (inset 2), but not along the Z dimension (inset 3). Scale bar 100 nm.

### Expediting 3D imaging

Volumetric imaging in SMLM is slow, because one needs to collect many thousands of partially overlapping images at each step of the z-axis to cover the entire volume, followed by additional post-processing to stitch data from multiple sub-volumes into a complete 3D dataset. Our method can image a large volume much faster because the whole volume is captured during each scan, and the 3D position of an emitter is measured directly with minimal post-processing, without the need for stitching. In our implementation, the camera images an oblique plane where its S and Y dimension determine the depth and the Y dimension of the volume respectively, while the X dimension of the volume is determined by the scan range. Given that the PSF size along the X dimension is ~300 nm a step size of ~150 nm would provide Nyquist sampling of the volume along the X-dimension. However, in our implementation the emitter is localized on the Y-S plane and steps along the X axis do not affect the size of the region on the camera for the emitter localization but determine the number of repeats on the PSF measurements. Given that a minimum of 2 measurements is sufficient to localize the position of an emitter in 3D, larger steps in the range of 450-700 nm can be used and expedite data acquisition.

To demonstrate this, we imaged E-cadherin in the follicle epithelium of stage 3-8 Drosophila egg chambers. E-cadherin is a homophilic transmembrane adhesion protein that plays a key role in the formation of the adherens junctions at the top of the lateral borders between epithelial cells. Cis interactions between E-cadherin molecules in the same cell lead to E-cadherin clustering, while adhesive trans interactions with E-cadherin in the neighbouring cell result in the alignment of these clusters in adjacent cell membranes ²³. This behaviour is captured in DNA-PAINT images, where juxtaposed traces of E-cadherin can be resolved in the membranes on both sides of a cell-cell junction.

Because of the abundance of binding sites in these E-cadherin traces and their defined geometry, we reasoned that by observing their evolution with increasing imaging time we could estimate the time required to acquire an accurate representation.

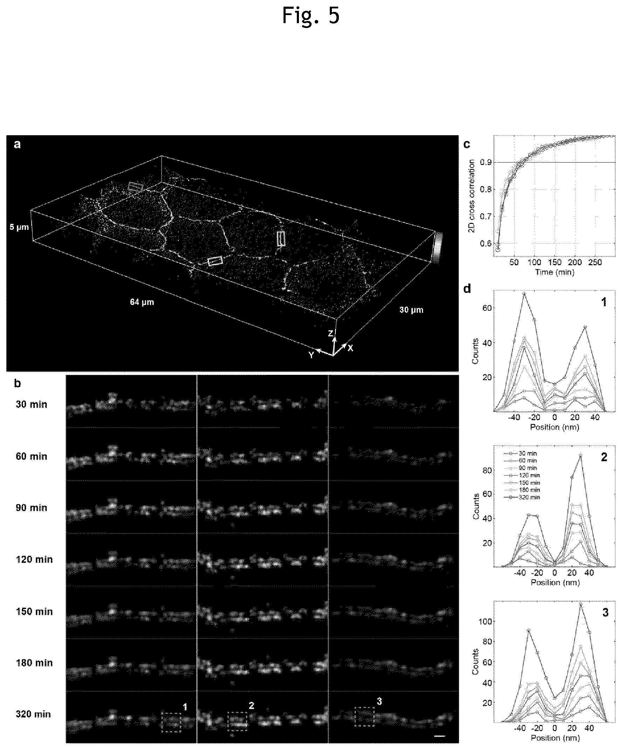

We captured 20000 oblique volumes of 30 x 100 x 40 µm³ (XYS) with a scan step of 488 nm and an exposure time of 20 msec at each step. These settings resulted in an imaging speed of 1.04 volumes per second and a total acquisition time of 320 min. A 3D reconstruction of part of this volume is shown in Fig 5a.

To evaluate the progression of the E-cadherin traces with time, we reconstructed images of the adherens junctions at increasing timepoints and used 2D correlation to measure their similarity to the final image, which was reconstructed using all localizations accumulated during the course of imaging (Fig. 5b). Incomplete traces of adherens junction are already apparent within 30 min and it takes about 70 min to obtain a more complete representation of the final image with correlation coefficients >0.9 (Fig. 5c). Expanding the volume along the Y and Z dimensions comes at no additional cost in acquisition time, and it is only the length of the scan and the step size along the X dimension that impact data collection times.

Finally, we note that the adherens junctions are not located in a single plane but often exhibit axial shifts of more than 500 nm along the perimeter of a single follicle cell (Fig. 5a). This makes capturing complete profiles of adherens junctions challenging when imaging in 2D. In contrast, our method captures these local variations in the profile of E-cadherin. More importantly, it can accommodate the oval geometry of the egg chamber and provide complete datasets over large volumes (Fig. 5a).

Fig. 5 shows, evolution of adherence junctions with imaging time, namely: (a) 3D reconstruction of a 30 x 64 x 5 µm³ (XYZ) volume capturing the adherence junction along the borders between several epithelial cell in a stage 7 Drosophila egg chamber. (b) Montage images showing the evolution of E-cadherin traces from different parts of the volume in (a) as a function of imaging time. Scale bar 100 µm. (c) 2D cross correlation between the E-cadherin images shown in (b) and the final E-cadherin image reconstructed from all localizations accumulated during imaging. (d) The signal distribution between juxtapose E-cadherin traces at different time points from parts of adherens junctions shown in (b).

### Multi-colour volumetric imaging

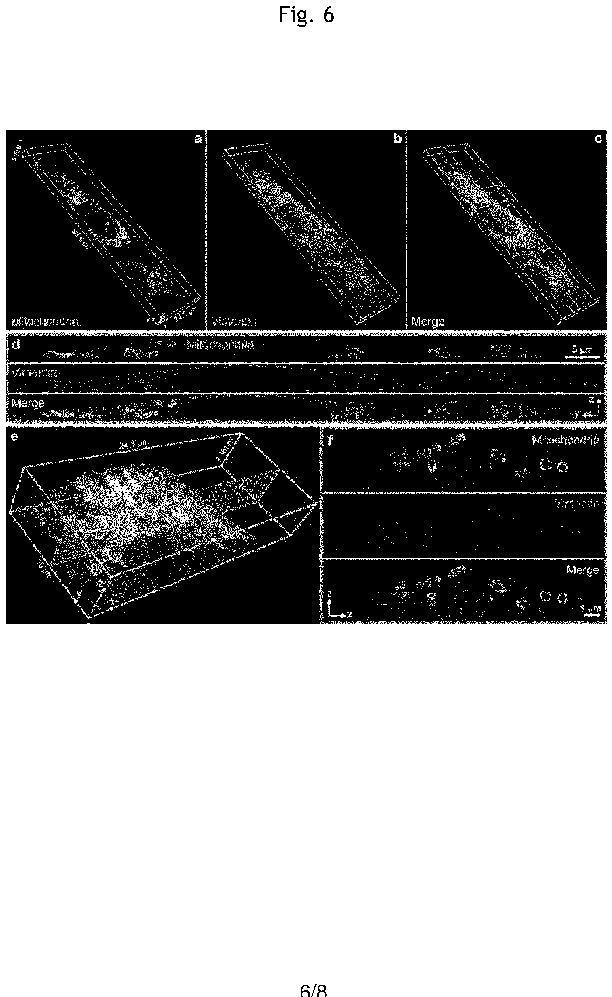

The speed, resolution and volumetric imaging of our method make it suitable for time intensive applications, such as spatial proteomics, where multiple proteins are localised within the same large volume of tissue. A key requirement for these approaches is the ability to detect multiple proteins in the same sample, and this multiplexing can be achieved by sequentially imaging different targets¹¹. To demonstrate the compatibility of our method with this type of multicolour imaging we used the Massive-PAINT 2-PLEX kit and imaged U2OS cells labelled for vimentin and mitochondria (Fig. 6).

Fig. 6 shows fast multicolour sequential imaging of Mitochondria/Vimentin in large 3D volumes. Cultured COS7 cells were sequentially imaged beginning with mitochondria (a) and followed by vimentin (b) to create a two-colour image (c). A 300 nm thick YZ cross section is presented in (d) showing the three-dimensional nature of both vimentin and mitochondria extending across two neighbouring cells. Smaller sub-volumes may be cropped from the larger whole as shown in (e) with an additional 300 nm thick XZ cross section shown in (f).

We note that our method also supports other SMLM multi-colour schemes that rely on spectrally distinct fluorophores. The detection path can be readily modified to accommodate additional dichroics and filters for spectrally distinct imaging channels. As the active region employed for OPM-SMS is a relatively small proportion of the now common 2048 x 2048 sensor format, multiple colour channels may be easily accommodated on a single camera, alleviating the need for more complicated synchronization architectures.

### Advantages of imaging methods according to the disclosure

In this work we introduce a method for SMLM that enables a ~20-fold increase in the 3D imaging speed of cells and tissues over previous light-sheet based implementations.

This was achieved by utilizing the unique features of OPM that enabled us to scan an oblique light-sheet across the sample volume without perturbing the sample, obtain aberration free PSFs from emitters at various depths away from the designed focal plane and perform multiple measurements to localize their position in 3D.

The length of the light-sheet determines the depth of the imaging volume while the width provides optical sectioning. In this work we used a gaussian light sheet with NA of 0.1, a length of ~40 µm and width of ~1 µm ²⁴. Imaging volumes with larger depths could be achieved by employing light-sheets with lower NAs that have longer lengths but at reduced optical sectioning.

Our method localizes emitters on the oblique plane. This localization geometry relaxes constraints of Nyquist sampling along the scan dimension and allows for larger scan steps. The size of the scan-step is now limited by need to perform a number of measurements of the position of the emitter to determine its position on the z axis and depends on the angle of the oblique plane and the axial dimension of the PSF. In our setup where the oblique plane is set at 28° and the axial FWHM of the PSF is ~800 nm, a scan step of ~700 nm is sufficient to allow for a minimum of 2 measurements on the position of the emitter. This represents a seven-fold increase in speed, compared to Nyquist sampling with steps of ~100 nm along the X dimension, expediting data acquisition and allowing the imaging of volumes that extend longer along the scanning dimension (X). The depth (Z) and Y dimension of the volume are determined by the region of the oblique plane captured by the camera and can be reduced or expanded with minimal impact on the overall acquisition time.

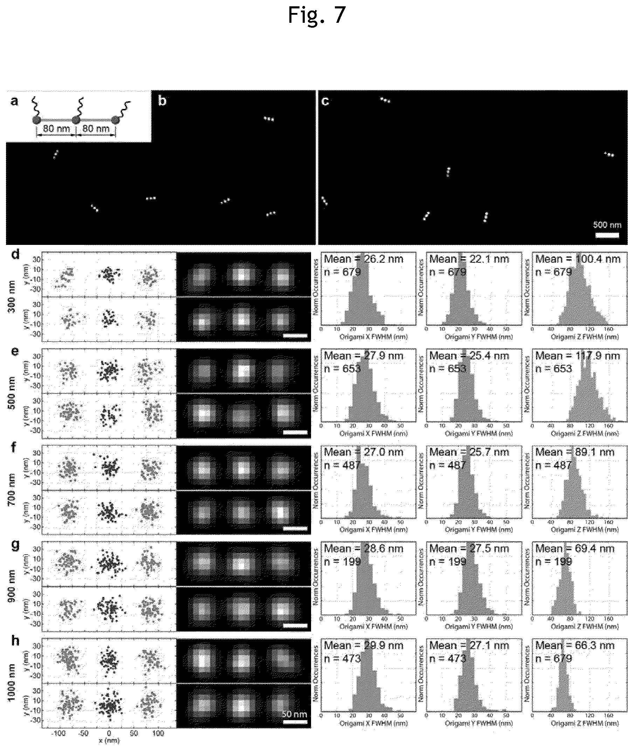

Validation of different mirror step sizes is presented in Fig. 7 where a well-defined synthetic DNA origami structure was imaged with mirror step sizes of 300, 500, 700, 900 and 1000 nm without significant change to imaging performance. Specifically, a synthetic DNA origami structure consisting of three binding sites arranged linearly with 80 nm spacing, as shown in Fig. 7a, and adhered to a cover glass was used to validate imaging performance with an array of mirror step sizes. Volumes of approximately 20 x 100 x 2 µm³ (x, y, z) were acquired. Two representative example (x, y) sub-regions from the larger images are shown for a 300 nm mirror step in Fig. 7b and a 700 nm mirror step in Fig. 7c. A custom analysis program was used to identify all the three-dot origami structures in each image and cluster the (x, y, z) points for each origami spot as shown for a 300 nm mirror step size in the first column of Fig. 7d. Three spot origami structures could be reconstructed into a traditional image as shown in the second column of Fig 7d. Each origami spot's full width at half maximum (FWHM) was found, separately, for x, y and z and the distributions of the spot sizes are shown in the third, fourth and fifth columns of Fig. 7d along with the mean values and number of origami spots analysed. The process was repeated for further mirror step sizes at 500, 700, 900 and 1000 nm as shown in Fig. 7e, Fig. 7f, Fig. 7g and Fig. 7h, respectively. For each mirror step size, the (x, y) FWHM is between 20 and 30 nm while along the z-dimension the FWHM is between 66 and 118 nm. Overall, this data shows that taking larger mirror steps such that the emitter's PSF is only sampled twice has no major impact on imaging performance and as mentioned above will dramatically speed up image acquisition time.

We note that instead of an oblique plane, a plane perpendicular to the optical axis of the primary objective can also be used as shown in Fig. 1b. This would set the oblique angle to zero and the optical setup will assume the configuration of a remote focusing system ²⁵. This configuration maximizes the volume along the X and Y dimensions but scanning along the Z dimension would have to be performed by stepping the tertiary objective. Additionally, this configuration would require widefield illumination that does not provide any optical sectioning. Nonetheless this could be a viable option for certain imaging applications with limited depth, such as cultured cells, and one could compensate for the lack of optical sectioning by using fluorogenic and/or optimized imager probes that reduce the background in PAINT imaging.

Alternatively, this method could also be applied to a setup where the image plane is shifted along the primary objective's optical axis using a deformable mirror or other wavefront shaping optical element as shown in Fig. 8. In this alternative configuration, a deformable mirror or other wavefront shaping optical element would be placed in a plane conjugate to the primary objective's back pupil plane. The deformable mirror or similar wavefront shaping optical element could quickly shift the z-plane being imaged while simultaneously applying aberration corrections at each z-step. This would allow a complete volume to be acquired quickly without mechanically perturbing the sample. Using large steps between z-planes and applying the same analysis methods presented here would allow the capture of full 3D volumes faster than achievable with a typical Nyquist step size. However, this modality does not inherently provide optical sectioning and may not be suitable for high background environments.

Fig. 8 shows a schematic of a setup for 3D single-molecule localization microscopy with a Deformable Mirror: (a) A 546 nm excitation laser passes through an AOTF and is coupled into a single mode optical fibre. Light exiting the fibre is collimated (L4), reflected from a mirror (M2) and focused on the back focal plane of the objective (OBJ 1) to illuminate a volume of the sample that contains single fluorescence emitters. (b) Fluorescence from an emitter is collected with the objective lens (OBJ 1) and is relayed to a deformable mirror located at a conjugate plane to the back focal plane of the objective lens. The Deformable Mirror manipulates the wavefront of the beam to control the axial shift of the sample plane captured by the camera. Therefore, by using the Deformable Mirror to apply different amounts of defocus on the beam, images from different depths of the sample volume are captured. This enables the sampling of the emitter's PSF multiple times along the axial dimension and its localization in all three dimensions (x, y, z). M: mirror, L: lens.

We have demonstrated that our method is well-suited for PAINT imaging where the blinks are produced by transient binding events with durations ranging between 50-500 ms. However, since the camera in our setup supports exposure times down to 2.5 ms, this method can also be implemented with other variants of SMLM including STORM, where the duration of photophysical blinking can be tuned in the 50-100 ms regime by adjusting the excitation intensity ²⁶.

Furthermore, since our method captures the entire sample volume during each scan of the light-sheet, emitters are localized in 3D throughout the entire volume without any subsequent stitch or deskew operations. Compared to methods that rely on imaging sub-volumes which are later stitched to a complete 3D dataset, our method is more time efficient as it abolishes the otherwise necessary overlap between neighbouring sub-volumes and simplifies post-processing.

More importantly our method can be combined with recent advances in multiplexed and quantitative imaging to increase throughput and enable omics-type of approaches over tissue volumes but with nm-level resolution and single protein sensitivity.

### References

1. Rust, M. J., Bates, M. & Zhuang, X. Sub-diffraction-limit imaging by stochastic optical reconstruction microscopy (STORM). Nat Methods 3, 793-796 (2006).
2. Betzig, E. et al. Imaging intracellular fluorescent proteins at nanometer resolution. Science (1979) 313, 1642-1645 (2006).
3. Hess, S. T., Girirajan, T. P. K. & Mason, M. D. Ultra-High Resolution Imaging by Fluorescence Photoactivation Localization Microscopy. Biophys J91, 4258-4272 (2006).
4. Huang, B., Wang, W., Bates, M. & Zhuang, X. Three-Dimensional Super-Resolution Imaging by Stochastic Optical Reconstruction Microscopy. Science (1979) 319, 810-813 (2008).
5. Pavani, S. R. P. et al. Three-dimensional, single-molecule fluorescence imaging beyond the diffraction limit by using a double-helix point spread function. Proc Natl Acad Sci U S A 106, 2995-9 (2009).
6. Shechtman, Y., Sahl, S. J., Backer, A. S. & Moerner, W. E. Optimal Point Spread Function Design for 3D Imaging. Phys Rev Lett 113, 133902 (2014).
7. Juette, M. F. et al. Three-dimensional sub-100 nm resolution fluorescence microscopy of thick samples. Nat Methods 5, 527-529 (2008).
8. Shtengel, G. et al. Interferometric fluorescent super-resolution microscopy resolves 3D cellular ultrastructure. Proceedings of the National Academy of Sciences 106, 3125-3130 (2009).
9. Aquino, D. et al. Two-color nanoscopy of three-dimensional volumes by 4Pi detection of stochastically switched fluorophores. Nat Methods 8, 353-359 (2011).
10. Huang, F. et al. Ultra-High Resolution 3D Imaging of Whole Cells. Cell 166, (2016).
11. Jungmann, R. et al. Multiplexed 3D cellular super-resolution imaging with DNA-PAINT and Exchange-PAINT. Nat Methods 11, 313-318 (2014).
12. Schueder, F. et al. Multiplexed 3D super-resolution imaging of whole cells using spinning disk confocal microscopy and DNA-PAINT. Nat Commun 8, 2090 (2017).
13. Cheng, J. et al. A single-molecule localization microscopy method for tissues reveals nonrandom nuclear pore distribution in Drosophila. J Cell Sci 134, (2021).
14. Sirinakis, G., Allgeyer, E. S., Cheng, J. & Johnston, D. S. Quantitative comparison of spinning disk geometries for PAINT based super-resolution microscopy. Biomed Opt Express 13, (2022).
15. Stelzer, E. H. K. et al. Light sheet fluorescence microscopy. Nature Reviews Methods Primers 1, 73 (2021).
16. Legant, W. R. et al. High-density three-dimensional localization microscopy across large volumes. Nat Methods 13, 359-365 (2016).
17. Dunsby, C. Optically sectioned imaging by oblique plane microscopy. Opt Express 16, 20306 (2008).
18. Sapoznik, E. et al. A versatile oblique plane microscope for large-scale and high-resolution imaging of subcellular dynamics. Elife 9, (2020).
19. Sirinakis, G., Allgeyer, E. S., Nashchekin, D. & St. Johnston, D. User-friendly oblique plane microscopy on a fully functional commercially available microscope base. Biomed Opt Express 15, 2358 (2024).
20. Los, G. V. et al. HaloTag: A Novel Protein Labeling Technology for Cell Imaging and Protein Analysis. ACS Chem Biol 3, 373-382 (2008).
21. Thevathasan, J. V. et al. Nuclear pores as versatile reference standards for quantitative superresolution microscopy. Nat Methods 16, 1045-1053 (2019).
22. Hampoelz, B., Andres-Pons, A., Kastritis, P. & Beck, M. Structure and Assembly of the Nuclear Pore Complex. Annu Rev Biophys 48, 515-536 (2019).
23. Yap, A. S., Brieher, W. M. & Gumbiner, B. M. MOLECULAR AND FUNCTIONAL ANALYSIS OF CADHERIN-BASED ADHERENS JUNCTIONS. Annu Rev Cell Dev Biol 13, 119-146 (1997).
24. Chang, B.-J., Dean, K. M. & Fiolka, R. Systematic and quantitative comparison of lattice and Gaussian light-sheets. Opt Express 28, 27052 (2020).
25. Botcherby, E. J., Juskaitis, R., Booth, M. J. & Wilson, T. Aberration-free optical refocusing in high numerical aperture microscopy. Opt Lett 32, 2007 (2007).
26. Diekmann, R. et al. Optimizing imaging speed and excitation intensity for single-molecule localization microscopy. Nat Methods 17, 909-912 (2020).
27. ZHANG, Y.-D., CHEN, L.-Y. & XU, T. Application of Improved Wavelet Transform in Biological Particle Detection*. PROGRESS IN BIOCHEMISTRY AND BIOPHYSICS 37, 1144-1150 (2010).
28. Wang, Y. et al. Localization events-based sample drift correction for localization microscopy with redundant cross-correlation algorithm. Opt Express 22, 15982 (2014).

## Claims

1. A method of three-dimensional fluorescence microscopy imaging for localising a fluorescent particle in three dimensions, the method comprising:
providing a sample to be imaged, wherein the sample comprises fluorescent particles configured to emit fluorescent light when excited;
illuminating a three-dimensional volume of the sample with excitation light, the excitation light being configured to excite the fluorescent particles in the sample;
imaging the fluorescent light emitted by the fluorescent particles within the illuminated three-dimensional volume, by imaging a plurality of substantially two-dimensional slices of the three-dimensional volume, wherein each of the images of the slices comprises substantially two-dimensional sections of three-dimensional point spread functions of imaged fluorescent particles;
wherein an image plane is oblique or parallel to a focal plane of an objective lens configured to collect the fluorescent light emitted by the fluorescent particles for imaging; and
wherein a rate at which the plurality of substantially two-dimensional slices are imaged is such that the point spread function for a fluorescent particle in the first state is imaged in at least two consecutive slices.

2. The method of claim 1, wherein the imaging is performed by remote focusing.

3. The method of any preceding claim, wherein the three-dimensional volume is imaged a plurality of times corresponding to plurality of imaging cycles, each imaging cycle imaging the plurality of substantially two-dimensional slices of the three-dimensional volume.

4. The method of any preceding claim, wherein each of the fluorescent particles is configured to transition between a first state in which the fluorescent particle is individually detectable, and second state in which the fluorescent particle is not individually detectable; and wherein a rate at which the plurality of substantially two-dimensional slices are imaged and an average rate at which the fluorescent particles transition from the first state to the second state have a relationship such that the point spread function for a fluorescent particle in the first state is imaged in at least two consecutive slices.

5. The method of any preceding claim, further comprising:
processing the images of the plurality two-dimensional slices to determine a position of each imaged fluorescent particle in three-dimensions based on the imaged three-dimensional point spread functions of the fluorescent particles;
generating a three-dimensional image based on the determined positions of each imaged fluorescent particle.

6. The method of claim any preceding claim, wherein the z-position of each imaged fluorescent particle is determined based on an estimated position of a peak photon number and/or intensity determined from images of the plurality two-dimensional slices corresponding a respective imaged fluorescent particle.

7. The method of any preceding claim, wherein the imaging is performed by scanning an oblique excitation light-sheet to image each two-dimensional slice.

8. The method of claim 7, wherein the excitation light-sheet is provided to the sample through an objective lens configured to collect the fluorescent light emitted by the fluorescent particles for imaging.

9. The method of claim 7, wherein the excitation light-sheet is scanned across the sample using one or more mirrors.

10. The method of claims 9, wherein the wherein the excitation light-sheet is scanned across the sample using a pair of mirrors.

11. The method of claim 10, wherein the one or more mirrors are arranged substantially at a primary image plane of an optical system comprising the objective lens.

12. The method of any one of claims 9 to 12, wherein the one or more mirrors are galvanometric mirrors.

13. The method of any one of claims 7 to 12, wherein the angle of the excitation light-sheet relative to the focal plane of the objective lens is substantially the same over a scanning range.

14. The method of any one of claims 8 to 13, wherein the objective lens has a high numerical aperture.

15. The method of claim 14, wherein the numerical aperture is between 1 and 1.5, e.g. around 1.4.

16. The method of any one of claims 7 to 15, wherein a plane of an imaging sensor configured to capture the images is arranged substantially parallel to a plane of the excitation light-sheet.

17. The method of any one of claims 1 to 6, wherein the imaging is performed by scanning a tertiary objective forming an imaging optical system to image each two-dimensional slice.

18. The method of any one of claims 1 to 6, wherein the imaging is performed by scanning using a deformable mirror to image each two-dimensional slice.

19. The method of any preceding claim, wherein the fluorescent particles are single-molecule emitters.

20. The method of any preceding claims, wherein the fluorescent particles are diffuse within the sample and configured to bind to structures of interest within the sample, wherein the fluorescent particles are localised in the bound state.

21. The method of claim 20, wherein the fluorescent particles comprise DNA oligonucleotides attached to fluorophores configured to bind to complementary DNA oligonucleotides attached to proteins of interest within the sample.

22. The method of any preceding claim, wherein the fluorescent particles comprise fluorescent particles configured to emit different colours, for multicolour imaging.

23. A system for three-dimensional fluorescence microscopy imaging for localising a fluorescent particle in three dimensions, the system comprising:
a sample to be imaged, wherein the sample comprises fluorescent particles configured to emit fluorescent light when excited,;
a microscopy system configured to:
illuminate a three-dimensional volume of the sample with excitation light, the excitation light being configured to excite the fluorescent particles in the sample;
image the fluorescent light emitted by the fluorescent particles within the illuminated three-dimensional volume, by imaging a plurality of substantially two-dimensional slices of the three-dimensional volume, wherein each of the images of the slices comprises substantially two-dimensional sections of three-dimensional point spread functions of imaged fluorescent particles;
wherein an image plane is oblique or parallel to a focal plane of an objective lens configured to collect the fluorescent light emitted by the fluorescent particles for imaging; and
wherein a rate at which the plurality of substantially two-dimensional slices are imaged is such that the point spread function for a fluorescent particle in the first state is imaged in at least two consecutive slices.

24. The system of claim 23, wherein the microscopy system is an oblique plane microscopy system, and the oblique plane microscopy system comprises:
a first optical system comprising a first objective lens, the first optical system configured to deliver excitation light in the form of an oblique light sheet to an object and gather fluorescence light from the object in response to the excitation light sheet;
an excitation light coupling unit configured to couple the excitation light to an optical path of the first optical system; and
at least two synchronised scanning mirrors arranged on the optical path, configured to scan the excitation light across the sample and de-scan the fluorescence light.

25. A method of controlling the system of claim 23 or 24, the method comprising:
controlling the microscopy system to illuminate a three-dimensional volume of the sample with excitation light, the excitation light-sheet being configured to excite the fluorescent particles in the sample when the particles are in the first state;
controlling oblique plane microscopy system to image the fluorescent light emitted by the fluorescent particles within the illuminated three-dimensional volume, by imaging a plurality of substantially two-dimensional slices of the three-dimensional volume, wherein each of the images of the slices comprises substantially two-dimensional sections of three-dimensional point spread functions of imaged fluorescent particles;
wherein a rate at which the plurality of substantially two-dimensional slices are imaged is such that the point spread function for a fluorescent particle in the first state is imaged in at least two consecutive slices.

26. An image processing method comprising:
obtaining images a plurality of substantially two-dimensional slices of the three-dimensional volume, wherein each of the images of the slices comprises substantially two-dimensional sections of three-dimensional point spread functions of imaged fluorescent particles, wherein the images are previously obtained by the imaging method of any of claims 1 to 22;
processing the images of the plurality two-dimensional slices to determine a position of each imaged fluorescent particle in three-dimensions based on the imaged three-dimensional point spread functions of the fluorescent particles; and
generating a three-dimensional image based on the determined positions of each imaged fluorescent particle.
